(19) Europäisches Patentamt / European Patent Office / Office européen des brevets

(11) **EP 4 678 780 A1**

(12) **EUROPEAN PATENT APPLICATION**
published in accordance with Art. 153(4) EPC

(43) Date of publication:
**14.01.2026 Bulletin 2026/03**

(21) Application number: **23935413.7**

(22) Date of filing: **28.04.2023**

(51) International Patent Classification (IPC):
*C23C 2/06* (2006.01)    *C23C 2/28* (2006.01)
*C23C 8/10* (2006.01)    *C23C 8/80* (2006.01)

(52) Cooperative Patent Classification (CPC):
**C23C 2/06; C23C 2/28; C23C 8/10; C23C 8/80**

(86) International application number:
**PCT/JP2023/016963**

(87) International publication number:
**WO 2024/224638 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: JFE Steel Corporation
Tokyo 100-0011 (JP)

(72) Inventors:
• **TERASHIMA, Shotaro**
Tokyo 100-0011 (JP)

• **NAKAGAITO, Tatsuya**
Tokyo 100-0011 (JP)
• **YOSHITOMI, Hiromi**
Tokyo 100-0011 (JP)
• **HOSHINO, Katsuya**
Tokyo 100-0011 (JP)
• **OKUMURA, Yusuke**
Tokyo 100-0011 (JP)

(74) Representative: **Haseltine Lake Kempner LLP
One Portwall Square
Portwall Lane
Bristol BS1 6BH (GB)**

(54) **HOT-DIP GALVANNEALED STEEL SHEET MANUFACTURING METHOD**

(57) Provided is a galvannealed steel sheet having a beautiful surface appearance free of defects such as bare spots, excellent coating adhesion, and excellent hydrogen embrittlement resistance. A method of producing the galvannealed steel sheet includes: heating a steel sheet having a chemical composition containing, in mass%, Si: 0.10 % or more and 2.00 % or less, and Mn: 1.0 % or more and 5.0 % or less, to 600 °C or more in an oxidizing atmosphere containing $O_2$: 1000 volume ppm or more and 30,000 volume ppm or less; holding the steel sheet after the oxidizing process at 700 °C or more in a reducing atmosphere having a hydrogen concentration of more than 8 vol% and 30 vol% or less for 20 s or longer; holding the steel sheet at 750 °C or more in a soaking atmosphere having a hydrogen concentration of 0.2 vol% or more and 8 vol% or less for 20 s to 300 s; cooling the steel sheet; immersing the steel sheet in a hot-dip galvanizing bath to obtain a hot-dip galvanized steel sheet; carrying out an alloying treatment on the hot-dip galvanized steel sheet to obtain a galvannealed steel sheet; and cooling the galvannealed steel sheet to a cooling stop temperature that is the Ms temperature or less, then holding the galvannealed steel sheet at a temperature that is the cooling stop temperature or more, 100 °C or more, and 450 °C or less for 30 s or longer in a reheating atmosphere having a hydrogen concentration of 0.2 vol% or less.

**Description**

TECHNICAL FIELD

The present disclosure relates to a method of producing a galvannealed steel sheet.

BACKGROUND

In recent years, from the perspective of global environment protection, there has been a strong demand for improved fuel efficiency to decrease $CO_2$ emissions from automobiles. Accordingly, there has been a growing trend to decrease the weight of automotive bodies by sheet metal thinning, which has led to an increased need for higher strength steel sheets that are used as material for automotive body parts.

In order to increase the strength of steel sheets, it is effective to add elements having a solid solution strengthening ability, such as Si and Mn. These elements are more easily oxidized than Fe.

Typically, a galvannealed steel sheet is produced by using a thin steel sheet obtained by hot rolling or cold rolling a slab as a base steel sheet, annealing the base steel sheet in an annealing furnace of a continuous hot-dip galvanizing line (CGL), and then carrying out a hot-dip galvanizing treatment and an alloying treatment. When a galvannealed steel sheet is produced using a high-strength steel sheet containing a large amount of easily oxidizable elements such as Si and Mn as a base steel sheet, the easily oxidizable elements in the base steel sheet are oxidized during annealing and concentrated on the base steel sheet surface, forming oxides on the base steel sheet surface. These oxides decrease the wettability of the base steel sheet surface to molten zinc, which can cause deterioration of appearance such as bare spots and degradation of coating adhesion. Further, the presence of oxides between the base steel sheet and the hot-dip galvanized coating may cause degradation of coating adhesion. Hereinafter, the term "coatability" is used to refer to both coating appearance and coating adhesion.

As a method of producing a hot-dip galvanized steel sheet using a high-strength steel sheet containing a large amount of Si as a base steel sheet, Patent Literature (PTL) 1 describes a technique in which an oxide film is formed on a steel sheet surface and then reduction annealing is carried out.

PTL 2 describes a technique of promoting dehydrogenation in a hot-rolled steel sheet at a temperature of 450 °C or more and 550 °C or less and a $H_2$ concentration of 9 % or more.

PTL 3 describes a technique of decreasing hydrogen content in a hot-rolled steel sheet by controlling annealing temperature and hydrogen concentration in an annealing furnace.

PTL 4 describes a technique of changing the ratio of water vapor partial pressure to hydrogen partial pressure in a heating zone and a soaking zone.

Further, PTL 5 describes a method of producing a high-strength hot-dip galvanized steel sheet having excellent coatability and hydrogen embrittlement resistance, in which hydrogen in the steel is decreased by heating the steel sheet after annealing and coating treatment under defined conditions.

CITATION LIST

Patent Literature

PTL 1: JP 2016-053211 A
PTL 2: JP S54-130443 A
PTL 3: JP 3266008 B2
PTL 4: JP 5811841 B2
PTL 5: JP 2020-045568 A

SUMMARY

(Technical Problem)

In the method described in PTL 1, there is room for improvement in coatability when the amount of Mn relative to the amount of Si added to the steel is a defined amount or more. Further, according to PTL 1, the steel sheet is held at high temperature in a reducing atmosphere containing hydrogen in order to reduce the oxidized steel sheet, and at this time, hydrogen in the furnace atmosphere enters into the steel. The steel is then subjected to a coating treatment with hydrogen still contained therein. However, hydrogen diffuses much slower in the coated layer than in the steel, and therefore diffusible hydrogen remains in the steel, which may cause hydrogen embrittlement.

Further, both PTL 2 and 3 describe techniques for suppressing blistering (coating swelling) of hot-rolled steel sheets that are insufficient for improving the delayed fracture resistance of high-strength cold-rolled steel sheets. Further, in the method of PTL 3, when the steel sheet is oxidized and reduced to secure coatability, reduction is insufficient. Further, although PTL 3 does not specify the dew point, there is a risk that the steel sheet may be oxidized, depending on the balance between the dew point and the hydrogen concentration.

In the technique of PTL 4, the ratio of water vapor partial pressure to hydrogen partial pressure is changed by changing the dew point, and no consideration is given to a case where the hydrogen concentration is changed.

Further, according to PTL 5, the only limitation regarding the atmosphere in the annealing process is the hydrogen concentration, and there is no mention of water content in the furnace, such as the dew point. The method described in PTL 5 does not include an oxidizing-reducing process, and therefore may impair coatability depending on the amounts of Si and Mn contained in the steel. For example, in Example 1 of PTL 5, a cold-rolled steel sheet having 1.25 mass% Si and 2.67 mass% Mn as steel chemical components is annealed in an atmosphere with a dew point of -30 °C without going through pre-processing such as an oxidizing-reducing process, and then is subjected to a hot-dip galvanizing treatment. This method has the risk of causing defects such as bare spots and impairing surface appearance, and does not sufficiently consider the appropriate balance between hydrogen embrittlement resistance and surface appearance, as in the present disclosure.

As described above, in the production of a high-strength galvannealed steel sheet, a method has not yet been developed that achieves both coatability and hydrogen embrittlement resistance by specifying, in detail, appropriate atmospheric conditions and heat treatment conditions according to the steel sheet chemical composition.

Therefore, it would be helpful to provide a galvannealed steel sheet having a beautiful surface appearance free of defects such as bare spots, excellent coating adhesion, and excellent hydrogen embrittlement resistance.

(Solution to Problem)

As a result of intensive studies, the inventors have discovered that by controlling the atmosphere during steel sheet heating and also subjecting the steel sheet after coating and alloying treatments to a defined heat treatment, it is possible to produce a galvannealed steel sheet having a beautiful surface appearance, excellent coating adhesion, and excellent hydrogen embrittlement resistance. In particular, by making the hot-dip galvanized layer into a galvannealed layer having a high hydrogen diffusion rate and then subjecting the layer to a defined heat treatment, it is possible to significantly decrease the amount of hydrogen in the steel.

The present disclosure is based on the above discoveries. Primary features of the present disclosure are as follows.

[1] A method of producing a galvannealed steel sheet, the method comprising:

an oxidizing process of heating a steel sheet having a chemical composition containing, in mass%, Si: 0.10 % or more and 2.00 % or less, and Mn: 1.0 % or more and 5.0 % or less, to 600 °C or more in an oxidizing atmosphere containing $O_2$: 1000 volume ppm or more and 30,000 volume ppm or less;
a reducing process of holding the steel sheet after the oxidizing process at 700 °C or more in a reducing atmosphere having a hydrogen concentration of more than 8 vol% and 30 vol% or less for 20 s or longer;
a soaking process of holding the steel sheet after the reducing process at 750 °C or more in a soaking atmosphere having a hydrogen concentration of 0.2 vol% or more and 8 vol% or less for 50 s to 300 s;
a cooling process of cooling the steel sheet after the soaking process;
a coating process of immersing the steel sheet after the cooling in a hot-dip galvanizing bath to obtain a hot-dip galvanized steel sheet;
an alloying process of carrying out an alloying treatment on the hot-dip galvanized steel sheet to obtain a galvannealed steel sheet; and
a cooling-reheating process of cooling the galvannealed steel sheet to a cooling stop temperature that is the Ms temperature or less, then holding the galvannealed steel sheet at a temperature that is the cooling stop temperature or more, 100 °C or more, and 450 °C or less for 30 s or longer in a reheating atmosphere having a hydrogen concentration of 0.2 vol% or less.

[2] The method of producing a galvannealed steel sheet according to [1], above, wherein [Si]/[Mn] in the chemical composition is 0.23 or more, and

a dew point in the soaking process is -20 °C or more and +20 °C or less,
where [Si] and [Mn] indicate the content, in mass%, of Si and Mn in the chemical composition.

[3] The method of producing a galvannealed steel sheet according to [1], above, wherein [Si]/[Mn] in the chemical composition is less than 0.23,

a dew point in the reducing process is less than -20 °C, and
a dew point in the soaking process is less than -20 °C,
where [Si] and [Mn] indicate the content, in mass%, of Si and Mn in the chemical composition.

[4] The method of producing a galvannealed steel sheet according to any one of [1] to [3], above, wherein the hydrogen concentration in the soaking process is 0.2 vol% or more and 5 vol% or less.

[5] The method of producing a galvannealed steel sheet according to any one of [1] to [4], above, wherein, in the cooling process, the steel sheet after the soaking process is cooled in an atmosphere having a hydrogen concentration of 0.5 vol% or more and 30 vol% or less and a dew point of 0 °C or less from 600 °C or more and 900 °C or less at an average cooling rate of 10 °C/s or more to 300 °C or more and 500 °C or less.

[6] The method of producing a galvannealed steel sheet according to any one of [1] to [5], above, wherein the chemical composition further contains, in mass%,

C: 0.05 % or more and 0.40 % or less,
P: 0.001 % or more and 0.100 % or less,
S: 0.0200 % or less,
Al: 0.003 % or more and 2.000 % or less, and
N: 0.0100 % or less, with the balance being Fe and inevitable impurity.

The method of producing a galvannealed steel sheet according to [6], above, wherein the chemical composition further contains, in mass%, one or more selected from:

B: 0.0100 % or less,
Ti: 0.200 % or less,
Nb: 0.200 % or less,
Sb: 0.200 % or less,
Sn: 0.200 % or less,
V: 0.100 % or less,
Cu: 1.00 % or less,
Cr: 1.00 % or less,
Ni: 1.00 % or less,
Mo: 0.50 % or less,
Ta: 0.100 % or less,
W: 0.500 % or less,
Zr: 0.020 % or less,
Ca: 0.0200 % or less
Mg: 0.0200 % or less,
Zn: 0.020 % or less,
Co: 0.020 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less.

[8] The method of producing a galvannealed steel sheet according to any one of [1] to [7], above, wherein, in the cooling-reheating process, the cooling stop temperature is (Ms temperature - 50 °C) or less.

[9] The method of producing a galvannealed steel sheet according to [8], above, wherein the cooling stop temperature is (Ms temperature - 100 °C) or less.

(Advantageous Effect)

According to the present disclosure, it is possible to provide a galvannealed steel sheet having a beautiful surface appearance free of defects such as bare spots, excellent coating adhesion, and excellent hydrogen embrittlement resistance.

BRIEF DESCRIPTION OF THE DRAWINGS

In the accompanying drawings:

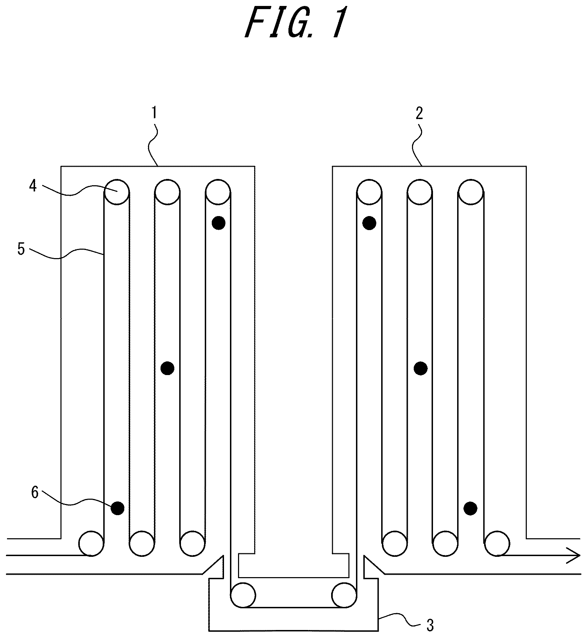

FIG. 1 is a diagram illustrating an example of atmosphere dew point measurement positions in a split-type annealing furnace.

DETAILED DESCRIPTION

Conventionally, it has been difficult to achieve both a beautiful surface appearance and excellent coating adhesion, as well as hydrogen embrittlement resistance. Oxidation-reduction of steel sheets is effective in improving the coatability of steel containing Si and Mn. In order to complete the reduction of Fe oxides before coating, annealing in an atmosphere that has a high hydrogen concentration is essential, which inevitably results in a large amount of hydrogen entering into the steel. When the hydrogen concentration during annealing is low, Fe reduction is not completed, and Fe oxides remaining on the steel sheet surface lead to degradation of coatability. Therefore, according to the present disclosure, annealing is divided into a reducing process and a soaking process, and after the reduction is completed at a high hydrogen concentration, the hydrogen concentration in the soaking process is lowered as required to the minimum level at which Fe is not reoxidized, thereby making it possible to decrease an amount of hydrogen that has entered into the steel.

Embodiments of the present disclosure are described below. However, the present disclosure is not limited to the following embodiments.

In the following, the units for the content of each element in the steel chemical composition and the content of each element in the chemical composition of the coated layer are all "mass%", and are simply indicated as "%" unless otherwise specified. Further, the unit of hydrogen concentration is "vol%", and is simply indicated as "%" unless otherwise specified. Hereinafter, a numerical range expressed by using "to" means a range including numerical values described before and after "to" as the lower limit value and the upper limit value.

Hereinafter, a steel sheet being "high-strength" means that the tensile strength of the steel sheet is 340 MPa or more.

First, appropriate ranges for a chemical composition of the base steel sheet and reasons for such limitations are described.

Si: 0.10 % or more and 2.00 % or less

Si is a solid-solution-strengthening element and contributes to increasing the strength of the steel sheet. Further, Si has the effects of suppressing carbide formation and making it easier to obtain retained austenite, and is therefore effective in achieving both strength and ductility of the steel sheet. To obtain these effects, Si content needs to be 0.10 % or more. On the other hand, when the Si content exceeds 2.00 %, hot rolling manufacturability and cold rolling manufacturability are greatly decreased, which may adversely affect productivity and may even decrease the ductility of the steel sheet itself. Further, the formation of silicon oxide on the steel sheet surface becomes significant, making it impossible to obtain good coatability in some cases. The Si content is therefore 0.10 % or more and 2.00 % or less. The Si content is preferably 0.25 % or more. Further, the Si content is preferably 1.70 % or less.

Mn: 1.0 % or more and 5.0 % or less

Mn is an element that increases the strength of steel by solid solution strengthening, improves hardenability, and promotes the formation of retained austenite, bainite, and martensite. These effects are obtained by the addition of Mn in an amount of 1.0 % or more. On the other hand, when Mn content exceeds 5.0 %, not only will costs increase, but even when the production method according to the present embodiment is used, the formation of Mn oxides on the steel sheet surface during coating may not be sufficiently suppressed, and good coatability may not be obtainable. The Mn content is therefore 1.0 % or more and 5.0 % or less. The Mn content is more preferably 1.5 % or more. The Mn content is even more preferably 2.0 % or more. The Mn content is more preferably 4.0 % or less. The Mn content is even more preferably 3.5 % or less.

The chemical composition of the base steel sheet according to the present embodiment requires that Si and Mn content satisfy defined amounts and ratios. Other components may be freely selected in accordance with the design of mechanical properties and are not particularly limited. However, in order to obtain a steel sheet having a tensile strength of 340 MPa or more, the following chemical composition is preferable.

C: 0.05 % or more and 0.40 % or less

C is an element effective in increasing the strength of the steel sheet, and contributes to increasing the strength by forming martensite, which is one of the hard phases in the steel microstructure. To do so, C content is preferably 0.05 % or more. Further, in order to obtain good weldability, the C content is preferably 0.40 % or less. The C content is more preferably 0.07 % or more. Further, the C content is preferably 0.35 % or less.

P: 0.001 % or more and 0.100 % or less

By suppressing P content, better weldability is obtainable. Further, suppressing the P content can prevent P from segregating at grain boundaries, thus improving ductility, bendability, and toughness in particular. Further, by suppressing the P content, it is possible to suppress ferrite transformation and prevent crystal grain size from becoming coarse. The P content is therefore preferably 0.100 % or less. The P content is more preferably 0.050 % or less. A lower limit of P is not particularly limited. In view of production technology constraints, the P content may be more than 0 % and may be 0.001 % or more.

S: 0.0200 % or less (not including 0 %)

S content is preferably 0.0200 % or less. The S content is more preferably 0.0150 % or less. Suppressing the S content can prevent degradation of weldability as well as degradation of ductility during hot working, suppress hot cracking, and significantly improve surface characteristics. Further, by suppressing the S content, formation of coarse sulfides can be prevented, and better ductility, bendability, and stretch flangeability is obtainable. The S content is therefore preferably 0.0200 % or less. The S content is more preferably 0.0100 % or less. A lower limit of the S content is not particularly limited. In view of production technology constraints, the S content may be more than 0 % and may be 0.0001 % or more.

Al: 0.003 % or more and 2.000 % or less

Al is thermodynamically most oxidizable, and therefore oxidizes prior to Si and Mn, suppressing oxidation of Si and Mn at the steel sheet outermost layer and promoting oxidation of Si and Mn inside the steel sheet. This effect is obtained with Al content of 0.003 % or more. On the other hand, from a cost perspective, the Al content is preferably 2.000 % or less. Therefore, when added, the Al content is preferably 0.003 % or more. The Al content is preferably 2.000 % or less. The Al content is more preferably 0.010 % or more.

N: 0.0100 % or less (not including 0 %)

N content is preferably 0.0100 % or less. By setting the N content to 0.0100 % or less, it is possible to more effectively prevent N from forming coarse nitrides with Ti, Nb, and V at high temperatures, and to prevent the effect of increasing the strength of the steel sheet by adding Ti, Nb, and V from being impaired. Further, by setting the N content to 0.0100 % or less, better toughness is obtainable. Further, setting the N content to 0.0100 % or less can help prevent slab cracking and surface defects during hot rolling. Accordingly, the N content is preferably 0.0100 % or less. The N content is more preferably 0.0050 % or less. A lower limit of the N content is not particularly limited. In view of production technology constraints, the N content may be more than 0 % and may be 0.0005 % or more.

The chemical composition may further contain a defined amount of at least one element selected from the following group of elements.

B: 0.0100 % or less

B is an effective element in improving the hardenability of steel. To improve the hardenability, B content is preferably 0.0001 % or more. The B content is more preferably 0.0005 % or more. In order to obtain better formability, the B content is preferably 0.0100 % or less. The B content is more preferably 0.0050 % or less.

Ti: 0.200 % or less

Ti is effective for strengthening of steel by precipitation. A lower limit of Ti is not particularly limited, yet is preferably 0.001 % or more to obtain the strength adjustment effect. When Ti is added to obtain better formability, Ti content is preferably 0.200 % or less. The Ti content is more preferably 0.060 % or less.

Nb: 0.200 % or less

Addition of Nb can provide an effect of improving strength. To obtain this effect, Nb content is preferably 0.001 % or more. The Nb content is more preferably 0.005 % or more. Further, by setting the content to 0.200 % or less, an increase in costs can be prevented. The Nb content is therefore preferably 0.200 % or less. The Nb content is more preferably 0.060 % or less.

Sb: 0.200 % or less

Sb can be added for the purposes of suppressing excessive decarburization of the steel sheet surface, preventing a decrease in the amount of martensite formed, and improving fatigue resistance and surface quality of the steel sheet. To obtain these effects, Sb content is preferably 0.001 % or more. On the other hand, to obtain better toughness, the Sb content is preferably 0.200 % or less. The Sb content is more preferably 0.060 % or less.

Sn: 0.200 % or less

Sn is an element that is effective in suppressing decarburization, denitrification, and the like, and in suppressing a decrease in the strength of steel. To obtain these effects, Sn content is preferably 0.002 % or more. On the other hand, to obtain better impact resistance, the Sn content is preferably 0.200 % or less. The Sn content is more preferably 0.060 % or less.

V: 0.100 % or less

The addition of V can provide an effect of improving strength. To obtain this effect, V content is preferably 0.001 % or more. The V content is more preferably 0.005 % or more. Further, by setting the content to 0.100 % or less, an increase in costs can be prevented. The V content is therefore preferably 0.100 % or less. The V content is more preferably 0.060 % or less.

Cu: 1.00 % or less

Cu is an element that increases the hardenability and is effective in bringing an area fraction of hard phase within a more suitable range to bring the tensile strength within a more suitable range. To achieve these effects, Cu content is preferably 0.005 % or more. The Cu content is more preferably 0.020 % or more. Further, when Cu is added, from the viewpoint of preventing an increase in costs, the Cu content is preferably 1.00 % or less. The Cu content is more preferably 0.20 % or less.

Cr: 1.00 % or less

The addition of Cr can improve the hardenability and improve the balance between strength and ductility. In order to obtain these effects, Cr content is preferably 0.001 % or more. Further, when Cr is added, from the viewpoint of preventing an increase in costs, the Cr content is preferably 1.00 % or less. The Cr content is more preferably 0.80 % or less.

Ni: 1.00 % or less

The addition of Ni can improve the hardenability and improve the balance between strength and ductility. In order to obtain these effects, Ni content is preferably 0.005 % or more. Further, when Ni is added, from the viewpoint of preventing an increase in costs, the Ni content is preferably 1.00 % or less. The Ni content is more preferably 0.80 % or less.

Mo: 0.50 % or less

The addition of Mo can provide an effect of strength adjustment. In order to obtain this effect, the Mo content is preferably 0.005 % or more. The Mo content is more preferably 0.01 % or more. Further, when Mo is added, from the viewpoint of preventing an increase in costs, the Mo content is preferably 0.50 % or less. The Mo content is more preferably 0.45 % or less.

Ta: 0.100 % or less

The addition of Ta can provide an effect of improving strength. In order to obtain this effect, Ta content is preferably 0.001 % or more. Further, when Ta is contained, from the viewpoint of preventing an increase in costs, the Ta content is preferably 0.100 % or less. The Ta content is more preferably 0.050 % or less.

W: 0.500 % or less

The addition of W can provide an effect of improving strength. In order to obtain this effect, W content is preferably 0.001 % or more. The W content is more preferably 0.003 % or more. Further, when W is contained, from the viewpoint of preventing an increase in costs, the W content is preferably 0.500 % or less. The W content is more preferably 0.450 % or less.

Zr: 0.020 % or less

The addition of Zr can improve ultimate deformability of the steel sheet and improve the stretch flangeability. In order to obtain these effects, Zr content is preferably 0.0005 % or more. The Zr content is more preferably 0.0010 % or more. Further, when Zr is contained, from the viewpoint of preventing an increase in costs, the Zr content is preferably 0.020 % or less. The Zr content is more preferably 0.010 % or less.

Ca: 0.0200 % or less

By containing 0.0005 % or more of Ca, sulfide morphology can be controlled, and ductility and toughness can be further improved. In order to obtain better ductility, Ca content is preferably 0.0200 % or less. The Ca content is more preferably 0.0100 % or less.

Mg: 0.0200 % or less

By containing 0.0005 % or more of Mg, sulfide morphology can be controlled, and ductility and toughness can be improved. In order to obtain better ductility, Mg content is preferably 0.0200 % or less. The Mg content is more preferably 0.0100 % or less.

Zn: 0.020 % or less

The addition of Zn can improve the ultimate deformability of the steel sheet and improve the stretch flangeability. In order to obtain this effect, Zn content is preferably 0.001 % or more. Further, when Zn is contained, from the viewpoint of preventing an increase in costs, the Zn content is preferably 0.020 % or less. The Zn content is more preferably 0.010 % or less.

Co: 0.020 % or less

The addition of Co can improve the ultimate deformability of the steel sheet and improve the stretch flangeability. In order to obtain these effects, Co content is preferably 0.001 % or more. When Co is contained, from the viewpoint of preventing an increase in costs, the Co amount is preferably 0.020 % or less. The Co amount is more preferably 0.010 % or less.

Ce, Se, Te, Ge, As, Sr, Cs, Hf, Pb, Bi, REM: 0.0200 % or less

By adding these elements, it is possible to obtain the effects of improving the ultimate deformability of the steel sheet and improving the stretch flangeability. In order to obtain these effects, it is preferable to set the content of at least one of these elements to 0.0001 % or more. On the other hand, from the viewpoint of preventing an increase in costs, when at least one of these elements is added, the content of each is preferably 0.0200 % or less.

The balance of the chemical composition of the base steel sheet according to the present embodiment other than the above-mentioned components is Fe and inevitable impurity.

Thickness of the base steel sheet according to the present embodiment is not particularly limited, and may typically be 0.5 mm or more and 3.2 mm or less.

The following is a description of the method of producing a galvannealed steel sheet according to an embodiment of the present disclosure.

First, a steel sheet having the chemical composition described above is produced according to a standard method. As one example, a steel slab having the above chemical composition is hot rolled and cold rolled to produce a cold-rolled steel sheet.

Next, before the steel sheet having the above chemical composition is immersed in a hot-dip galvanizing bath, the steel sheet is subjected to recrystallization annealing including an oxidizing process, a reducing process, and a soaking process. As one example, the cold-rolled steel sheet is supplied to a CGL. The configuration of the CGL is not particularly limited. As one example, the CGL includes a continuous annealing furnace in which a heating zone, a soaking zone, and a cooling zone are arranged in this order, a hot-dip galvanizing line provided downstream of the cooling zone, and an alloying furnace provided downstream of the hot-dip galvanizing line. As one example, a steel sheet is passed through a heating zone, a soaking zone, and a cooling zone in this order inside a continuous annealing furnace, where the steel sheet is subjected to recrystallization annealing, the steel sheet discharged from the cooling zone is subjected to hot-dip galvanization using a hot-dip galvanizing line to obtain a hot-dip galvanized steel sheet, and then the hot-dip galvanized steel sheet is subjected to an alloying treatment using an alloying furnace to obtain a galvannealed steel sheet.

[Oxidizing process]

By forming an iron oxide layer on the steel sheet surface in the oxidizing process and then forming reduced iron in the reducing process, it is possible to suppress the formation of Si and Mn oxides on the steel sheet surface and obtain excellent coatability. As one example, the oxidizing process is carried out in the heating zone of the CGL.

Oxidizing atmosphere containing $O_2$ at 1000 volume ppm or more and 30,000 volume ppm or less

By setting the $O_2$ concentration in the oxidizing atmosphere in the oxidizing process to 1000 volume ppm or more, oxidation of the steel sheet is promoted. When the $O_2$ concentration in the oxidizing atmosphere is less than 1000 volume ppm, the oxidation of the steel sheet is insufficient and the above effects are not obtainable. On the other hand, when the $O_2$ concentration in the oxidizing atmosphere exceeds 30,000 volume ppm, the oxidation of the steel sheet becomes excessive, and unreduced iron oxide remains in the subsequent reducing process, which causes degradation of coatability. The balance of the oxidizing atmosphere is not particularly limited. As one example, the balance of the oxidizing atmosphere is composed of $N_2$, $CO$, $CO_2$, $H_2O$, and inevitable impurity, and the ratios thereof are not particularly limited.

Steel sheet temperature: heated to 600 °C or more

In order to promote the oxidation of the steel sheet in the oxidizing process, the steel sheet temperature needs to be 600 °C or more. When the steel sheet temperature is less than 600 °C, oxidation is insufficient and the above effect is not obtained. The steel sheet temperature in the oxidizing process is preferably 650 °C or more. An upper limit of the steel sheet temperature in the oxidizing process is not particularly limited. The steel sheet temperature in the oxidizing process is preferably 900 °C or less. By setting the steel sheet temperature to 900 °C or less, excessive oxidation of the steel sheet can be more effectively prevented, and unreduced iron oxide can be more effectively prevented from remaining in the reducing process, thereby further improving the coatability. The steel sheet temperature is based on the temperature of the steel sheet surface. The same applies to the following various processes.

[Reducing process]

As described above, excellent coatability is obtainable by generating iron oxide in the oxidizing process and then reducing the iron oxide to generate a reduced iron layer. In the subsequent soaking process, the atmosphere has a low hydrogen concentration, and therefore the reduction reaction rate is slowed down. Therefore, it is necessary to complete the reduction of iron oxide in the reducing process.

Steel sheet temperature: 700 °C or more

When the steel sheet temperature in the reducing process is less than 700 °C, the reduction rate is slow and unreduced iron oxide may remain. The steel sheet temperature in the reducing process is preferably 750 °C or more. An upper limit of the steel sheet temperature in the reducing process is not particularly limited. In order to more suitably prevent deterioration of the furnace body, the steel sheet temperature in the reducing process is preferably 950 °C or less.

Hydrogen concentration: more than 8 vol% and 30 vol% or less

The greater the hydrogen concentration in the reducing atmosphere, the faster the reduction of iron oxide. However, the greater the hydrogen concentration, the greater the amount of solute hydrogen in the steel, leading to a degradation in hydrogen embrittlement resistance. When the hydrogen concentration in the reducing atmosphere is 8 vol% or less, the reduction rate of iron oxide becomes insufficient. On the other hand, when the hydrogen concentration in the reducing atmosphere exceeds 30 vol%, the reduction rate becomes saturated and it becomes difficult to sufficiently decrease the amount of hydrogen in the steel in the subsequent soaking process. Therefore, the hydrogen concentration in the reducing atmosphere is more than 8 vol% and 30 vol% or less. The hydrogen concentration in the reducing atmosphere is preferably 20 vol% or less. The hydrogen concentration is more preferably 18 vol% or less. The hydrogen concentration in the reducing atmosphere is preferably 12 vol% or more.

Holding time: 20 s or longer

The longer the holding time in the reducing atmosphere, the more advantageous it is in completing the reduction of iron oxide. When the holding time in the reducing atmosphere is shorter than 20 s, the reduction of the iron oxide might not be completed. The holding time in the reducing atmosphere is therefore 20 s or longer. The holding time in the reducing atmosphere is preferably 25 s or longer. An upper limit of the holding time in the reducing atmosphere is not particularly limited. From the viewpoint of productivity, the holding time in the reducing atmosphere is preferably 150 s or shorter.

[Soaking process]

The soaking process aims to decrease the amount of solute hydrogen in the steel sheet, introduced during the reducing process in which iron oxide reduction was carried out in a high hydrogen atmosphere.

Hydrogen concentration: 0.2 vol% or more and 8 vol% or less

In this process, the reduction of the steel sheet is completed, and therefore the steel sheet is held in a soaking atmosphere having a lower hydrogen concentration than in the reducing process, and the amount of solute hydrogen in the steel sheet can be decreased. In order to obtain this effect, the hydrogen concentration needs to be 8 vol% or less. Further, the hydrogen concentration is preferably 5 vol% or less. On the other hand, when the hydrogen concentration is less than 0.2 vol%, controlling the hydrogen concentration in the furnace to be uniform is difficult, and there is a risk of the reduced iron being reoxidized. The hydrogen concentration in the soaking atmosphere is therefore preferably 0.2 vol% or more. The hydrogen concentration is more preferably 0.5 vol% or more.

Steel sheet temperature: 750 °C or more

When the steel sheet temperature in the soaking process is less than 750 °C, the reduced iron layer of the steel sheet surface may be reoxidized. Further, recrystallization of the steel sheet microstructure may be insufficient, or the volume fraction of ferrite may become excessive, making it impossible to obtain the required material properties. The steel sheet temperature in the heating process is preferably 780 °C or more. An upper limit of the steel sheet temperature in the soaking process is not particularly limited. From the viewpoint of production apparatus, the steel sheet temperature is preferably 950 °C or less. The steel sheet temperature in the soaking process is more preferably 900 °C or less.

Holding time: 20 s to 300 s

When the holding time in the soaking process is shorter than 20 s, the amount of hydrogen in the steel might not be sufficiently decreased. On the other hand, when the holding time exceeds 300 s, a large amount of Si and Mn oxides are formed on the steel sheet outermost surface, which may lead to degradation of coatability. The holding time is therefore 20 s to 300 s. The holding time is preferably 50 s or longer. Further, the holding time is preferably 200 s or shorter.

Dew point during reducing process and soaking process

The dew point of the atmosphere in the reducing process and the soaking process is not particularly limited. From the viewpoint of ease of industrial handling, the dew point is preferably -50 °C or more. The dew point is preferably +20 °C or less. By setting the dew point at -50 °C or more, the cost of apparatus required to maintain the atmosphere can be further decreased. By setting the dew point at +20 °C or less, controlling the dew point inside the furnace becomes easier, and adverse effects on the furnace body can be suitably avoided.

Further, by setting the atmospheric dew point in the reducing process and the soaking process within an appropriate range depending on the value of [Si]/[Mn], which is the mass% ratio of Si to Mn content in the chemical composition of the steel sheet, it is possible to further improve the surface appearance and the hydrogen embrittlement resistance. [Si] and [Mn] respectively indicate the content, in mass%, of Si and Mn in the chemical composition. In the following, preferred atmospheric dew points are described separately for a case where [Si]/[Mn] is 0.23 or more and a case where [Si]/[Mn] is less than 0.23.

- [Si]/[Mn] $\geq$ 0.23 or more
- Dew point during soaking process: -20 °C or more and +20 °C or less

When [Si]/[Mn] is 0.23 or more, oxides formed in the steel sheet surface layer are mainly Si-Mn composite oxides. In this case, by setting the dew point in the soaking process in the above range, the formation of Si-Mn composite oxides in the interior of the steel sheet surface layer after completion of reduction of iron oxide is promoted, and the formation of oxides on the steel sheet outermost surface can be suppressed. This further improves coating wettability and provides a better surface appearance. Further, an effect of promoting the decrease of hydrogen in steel during the cooling-reheating process described below is also obtained. In order to obtain these effects, the dew point in the soaking process is preferably -20 °C or more. The dew point in the soaking process is more preferably -15 °C or more.

- [Si]/[Mn] < 0.23
- Dew point during reducing process: less than -20 °C
- Dew point during soaking process: less than -20 °C

When [Si]/[Mn] is less than 0.23, the Mn content in the steel is greater than the Si content, and therefore the oxides formed in the steel sheet surface layer are mainly oxides of Mn alone. In this case, by setting the reducing atmosphere and the dew point in the soaking process within the above ranges, it is possible to suppress the formation of oxides of Mn alone on the steel sheet outermost surface after completion of the reduction of iron oxide. This further improves coating wettability and provides a better surface appearance. To obtain these effects, the dew point in the reducing process is preferably less than -20 °C. The dew point in the reducing process is more preferably less than -25 °C. The dew point in the soaking process is preferably less than -20 °C. The dew point in the soaking process is more preferably less than -25 °C.

As described above, the hydrogen concentrations of the atmospheres used in the reducing process and the soaking process are different from each other. Further, the dew points used in the reducing process and the soaking process may be different. In the reducing process and the soaking process, the method for varying the hydrogen concentration and the dew point of the atmosphere is not particularly limited. For example, a furnace for performing both processes may be divided into two furnaces connected via sealing rollers, and gases controlled to the desired hydrogen concentrations and dew points may be fed into each of the divided furnaces separately. Further, the method of controlling the dew point of the gas is not particularly limited and, for example, there is a method of humidifying at least one of $N_2$ gas and $H_2$ gas by bubbling or the like before introduction into a furnace.

As one example, the reducing process and the soaking process are carried out by dividing the soaking zone of a CGL into upstream and downstream, using a furnace connected via sealing rollers. That is, one example of a CGL that can be suitably applied to the method of producing a galvannealed steel sheet according to the present disclosure is a continuous hot-dip galvanizing apparatus that includes a continuous annealing furnace in which a heating zone, a soaking zone, and a cooling zone are arranged in this order, and a hot-dip galvanizing line provided after the cooling zone, the soaking zone including an upstream soaking zone and a downstream soaking zone, and the upstream soaking zone and the downstream soaking zone being connected via sealing rollers. In this way, in a CGL including a soaking zone in which the upstream and downstream soaking zones are connected via sealing rollers, movement of atmosphere between the upstream and downstream soaking zones is blocked, and therefore it is possible to control the hydrogen concentrations and dew points of the atmospheres in the reducing process and the soaking process independently of each other. Therefore, this can be suitably applied to a method of controlling the hydrogen concentrations and the dew points of the atmospheres in the reducing process and the soaking process independently of each other, such as the method of producing a galvannealed steel sheet according to the present disclosure.

A method of monitoring the hydrogen concentration and the dew point in the atmosphere in the furnace is not particularly limited. For example, an atmosphere measurement port capable of directing the gas inside the furnace to the outside may be provided at a required position in each furnace, and the gas may be measured by connection to a hydrogen concentration meter and a dew point meter. Further, for example, when the reducing process and the soaking process are carried out in separate furnaces as described above, by providing independent atmosphere measurement ports at three locations in upper, middle, and lower portions of each furnace, it is possible to know the distribution state of the dew point and the hydrogen concentration in the height direction in the furnace. FIG. 1 illustrates an example of the atmospheric dew point measurement positions in a split-type annealing furnace. As one example, an example of a soaking zone of a CGL is schematically illustrated. As illustrated in FIG. 1, a steel strip 5 is supplied to a split-type annealing furnace including an upstream soaking zone 1 and a downstream soaking zone 2 connected via an atmosphere sealing zone 3, and the above-mentioned reducing process and soaking process are carried out. In this case, the dew point measurement positions 6 may be provided independently at three locations of each furnace, at upper, middle, and lower portions. By combining this with the control method described above, the atmosphere composition in the furnace can be continuously managed.

[Cooling process]

Next, the steel sheet after the soaking process is cooled. The cooling conditions are not particularly limited, but preferably, the steel sheet after the soaking process is cooled in a cooling atmosphere having a hydrogen concentration of 0.5 vol% or more and 30 vol% or less and a dew point of 0 °C or less from 600 °C or more and 900 °C or less at an average cooling rate of 10 °C/s or more to 300 °C or more and 500 °C or less. As one example, the cooling process occurs in the cooling zone of a CGL.

By cooling the steel sheet after the soaking process in a cooling atmosphere having a hydrogen concentration of 0.5 vol% or more and a dew point of 0 °C or less, reoxidation of the steel sheet surface during cooling can be suitably prevented. By setting the hydrogen concentration in the cooling atmosphere to 30 vol% or less, it is possible to more effectively prevent the amount of hydrogen in the steel from increasing during cooling. The hydrogen concentration in the cooling atmosphere is more preferably 5 vol% or more. The hydrogen concentration in the cooling atmosphere is more preferably 20 vol% or less. The dew point of the cooling atmosphere is more preferably -30 °C or less.

Further, in order to more suitably prevent an increase in the amount of hydrogen in the steel during cooling, it is preferable to cool the steel sheet at an average cooling rate of 10 °C/s or more from a steel sheet temperature of 600 °C or more and 900 °C or less. The cooling start temperature is more preferably 700 °C or more. Further, the average cooling rate is more preferably 15 °C/s or more. In order to cool the steel sheet temperature in the subsequent coating process to a temperature equivalent to the coating bath temperature, the cooling stop temperature is preferably 500 °C or less. Further, by setting the cooling stop temperature to 300 °C or more, it is possible to prevent martensitic transformation from occurring excessively, and to further improve the strength of the steel sheet. Accordingly, it is preferable to cool to 300 °C or more and 500 °C or less at the average cooling rate.

[Coating process]

Next, the steel sheet after the cooling process is immersed in a hot-dip galvanizing bath to obtain a hot-dip galvanized steel sheet. As one example, the coating process is carried out using a hot-dip galvanizing line of a CGL.

The conditions for immersion in the hot-dip galvanizing bath are not particularly limited, and a typical method may be used. The hot-dip galvanizing bath contains Al, Zn, and inevitable impurity, and the composition is not particularly specified. However, as one example, the Al concentration in the bath may be 0.05 mass% or more and 0.190 mass% or less. When the Al concentration in the bath is 0.05 mass% or more, occurrence of bottom dross can be more suitably prevented. Further, when the Al concentration in the bath is 0.190 mass% or less, occurrence of top dross can be more suitably prevented. From the viewpoint of cost, it is also preferable to set the Al concentration in the bath to 0.190 mass% or less. The coating bath temperature is not particularly limited, and may be 440 °C or more and 500 °C or less.

Coating weight per side is not particularly limited, and as one example, may be 25 g/m$^2$ or more and 80 g/m$^2$ or less. When the coating weight per side is 25 g/m$^2$ or more, corrosion resistance is particularly good and the coating weight is particularly easy to control. Further, when the coating weight per side is 80 g/m$^2$ or less, the coating adhesion is particularly good. The method for adjusting the coating weight is not particularly limited, and the coating weight may be adjusted by using gas wiping and adjusting the gas pressure and the distance between the wiping nozzle and the steel sheet.

[Alloying process]

The hot-dip galvanized steel sheet is subjected to an alloying treatment to obtain a galvannealed steel sheet. The hydrogen diffusion rate in the hot-dip galvanized layer, which is mainly composed of η phase before the alloying treatment, is significantly slower than that in the steel, and hinders release of the hydrogen in the steel in the subsequent cooling-reheating process. When the hot-dip galvanized layer becomes a galvannealed layer, the hydrogen diffusion rate in the galvannealed layer is much faster than that in the hot-dip galvanized layer, and therefore the release of hydrogen from the steel is promoted. Therefore, it is important to carry out the alloying process prior to the cooling-reheating process in order to significantly decrease the amount of hydrogen in the steel during the subsequent cooling-reheating process.

The conditions for the alloying treatment are not particularly limited. For example, the alloying treatment may be carried out by holding the steel sheet temperature at 440 °C or more. Further, the alloying treatment may be carried out by holding the steel sheet temperature at 600 °C or less. The alloying treatment may be carried out by holding the hot-dip galvanized steel sheet at the above temperature for 5 s to 60 s.

The galvannealed layer after alloying preferably has an alloying degree (Fe content in the hot-dip galvanized layer) of 7 mass% or more. Further, the alloying degree of the galvannealed layer after alloying is preferably 15 mass% or less. By setting the degree of alloying of the galvannealed layer to 7 mass% or more, it is possible to prevent the η phase from remaining in the galvannealed layer, and to more suitably decrease the amount of hydrogen in the steel in the cooling-reheating process. Further, by setting the degree of alloying of the galvannealed layer to 15 mass% or less, it is possible to more effectively prevent the formation of Γ phase at the interface between the galvannealed layer and the base steel sheet, and to obtain more suitable coating adhesion.

[Cooling-reheating process]

Next, the galvannealed steel sheet is subjected to the cooling-reheating process of cooling to a cooling stop temperature that is the Ms temperature or less, and then holding the galvannealed steel sheet at a temperature that is the cooling stop temperature or more, 100 °C or more, and 450 °C or less for 30 s or longer. In order to obtain excellent hydrogen embrittlement resistance, it is necessary to cool the galvannealed steel sheet after the alloying process to a temperature that is the Ms temperature or less, and then reheat the galvannealed steel sheet to further decrease the amount of hydrogen in the steel.

Cooling stop temperature: Ms temperature or less

Austenite can absorb more hydrogen into solid solution than ferrite, while the diffusion rate of hydrogen is faster in BCC structure ferrite and in BCT structure martensite than in FCC structure austenite. Therefore, by transforming austenite that contains a larger amount of solute hydrogen into martensite and then reheating, it is possible to more efficiently decrease the amount of hydrogen in the steel. Accordingly, the cooling stop temperature in the cooling-reheating process is equal to or less than the Ms temperature at which martensitic transformation begins. Further, the greater the degree of undercooling relative to the Ms temperature, the more the martensitic transformation is promoted, and reheating can be carried out from a state in which there is less untransformed austenite, which is advantageous for decreasing the amount of hydrogen in the steel. Accordingly, the cooling stop temperature in the cooling-reheating process is more preferably (Ms temperature - 50 °C) or less. The cooling stop temperature in the cooling-reheating process is even more preferably (Ms temperature - 100 °C) or less. A lower limit of the cooling stop temperature is not particularly limited. When the cooling stop temperature is less than 20 °C, the cooling zone is required to have a high heat extraction capacity, which leads to increased costs, and therefore the cooling stop temperature is preferably 20 °C or more.

Here, the Ms temperature is calculated by the following expression.

$$Ms\ (^{\circ}C) = 539 - 423 \times \{[C\%] \times 100/(100 - [\alpha\ area\%])\} - 30 \times [Mn\%] - 12 \times [Cr\%] - 18 \times [Ni\%] - 8 \times [Mo\%]$$

In this expression, [C%], [Mn%], [Cr%], [Ni%], and [Mo%] respectively represent the C content, Mn content, Cr content, Ni content and Mo content, in mass%, in the chemical composition of the steel sheet (the base steel sheet of the galvannealed steel sheet). Further, [α area%] is the area fraction, in %, of ferrite in the steel microstructure of the base steel sheet of the galvannealed steel sheet.

The area fraction of ferrite in the steel microstructure of the base steel sheet of the galvannealed steel sheet (hereinafter also referred to simply as the base steel sheet) is measured, for example, as follows. First, the coated layer on the surface of the galvannealed steel sheet is removed. A sample is cut from the base steel sheet such that a thickness cross-section parallel to the rolling direction of the base steel sheet (L-section) becomes an observation plane. The observation plane of the sample is then polished. The observation plane of the sample is then corroded with 1 vol% nital to reveal the steel microstructure. Then, a 1/4 sheet thickness position of the base steel sheet (a position corresponding to 1/4 of the sheet thickness in the depth direction from a surface) is observed at 3000× magnification by SEM for ten fields of view. In the observed images, ferrite in recesses has a flat internal texture and ferrite does not contain carbides. The area of the region occupied by ferrite is then determined for each field of view. Next, the total area of the region occupied by ferrite is divided by the total area of the observation field, and the result is multiplied by 100 to obtain the area fraction of ferrite in the steel microstructure of the base steel sheet. The measurement may be carried out on a galvannealed steel sheet that has been rapidly cooled, immediately after the alloying process, to a temperature of 200 °C or less by water quenching or the like in a temperature range from 600 °C (or the steel sheet temperature during the alloying treatment) to 200 °C at an average cooling rate of 50 °C/s or more. Further, it is preferable that the measurement is carried out in advance, for example, separately from the series of processes.

Atmospheric hydrogen concentration during reheating: 0.2 vol% or less

In order to promote the release of diffusible hydrogen in the steel to the outside of during reheating, it is advantageous to lower the hydrogen concentration in the atmosphere. Atmospheric hydrogen concentration is preferably 0.2 vol% or less. Atmospheric hydrogen concentration is more preferably 0.1 vol% or less. A lower limit of the hydrogen concentration is not particularly limited. Hydrogen gas is inevitably contained in the atmosphere, and the hydrogen concentration may therefore be, for example, 0.00001 vol% or more.

Reheating temperature: cooling stop temperature or more, 100 °C or more, and 450 °C or less

After cooling is stopped, in order to promote the release of hydrogen from the steel, reheating is carried out at a reheating temperature that is the cooling stop temperature or more. In order to obtain a sufficient effect of decreasing the amount of hydrogen in the steel, the reheating temperature needs to be 100 °C or more. On the other hand, when the reheating temperature exceeds 450 °C, there is a risk of degradation of the coatability. The reheating temperature is therefore 100 °C or more and 450 °C or less. The reheating temperature is preferably 200 °C or more. The reheating temperature is preferably 400 °C or less.

Holding time: 30 s or longer

When the holding time at the reheating temperature is shorter than 30 s, the effect of decreasing the amount of hydrogen in the steel becomes insufficient. The holding time at the reheating temperature is therefore 30 s or longer. The holding time at the reheating temperature is preferably 50 s or longer. An upper limit of the holding time at the reheating temperature is not particularly limited. From the viewpoint of productivity, the holding time at the reheating temperature is preferably 300 s or shorter.

Production conditions other than those described above may be determined according to conventional methods.

According to the production method described, it is possible to provide a galvannealed steel sheet having a tensile strength of preferably 340 MPa or more. The tensile strength of the galvannealed steel sheet is more preferably 500 MPa or more. The tensile strength is even more preferably 980 MPa or more. Here, the tensile strength (TS) is measured in accordance with JIS Z 2241, as follows. A JIS No. 5 test piece is taken from the galvannealed steel sheet so that the longitudinal direction is perpendicular to the rolling direction of the steel sheet. Using the test piece, a tensile test is carried out under the condition of a crosshead displacement speed Vc of $1.67 \times 10^{-1}$ mm/s, and TS is measured.

According to the production method described, it is possible to provide a galvannealed steel sheet having a decreased diffusible hydrogen content. The diffusible hydrogen content in the galvannealed steel sheet produced by the present production method is preferably 0.30 weight ppm or less. The diffusible hydrogen content is more preferably 0.20 weight ppm or less. A lower limit of the diffusible hydrogen content in the galvannealed steel sheet is not particularly limited, and may be, for example, 0.01 weight ppm or more.

Here, the diffusible hydrogen content is measured as follows. A test piece of 5 mm $\times$ 30 mm is cut out from the galvannealed steel sheet, and the galvannealed layer on the surface of the test piece is removed using a precision grinder. Immediately after, hydrogen analysis is carried out using a thermal desorption analyzer at an analysis start temperature of 25 °C, an analysis end temperature of 300 °C, and a heating rate of 200 °C/h, and the amount of released hydrogen at each temperature is measured. From these measurements, the cumulative amount of released hydrogen within the range from the analysis start temperature to 210 °C is determined as the diffusible hydrogen content in the steel.

EXAMPLES

Using cold-rolled steel sheets each having a thickness of 1.4 mm and the chemical composition listed in Table 1, galvannealed steel sheets were produced under the conditions listed in Tables 2-1 and 2-2, and the following evaluations were carried out. The evaluation results are listed in Tables 2-1 and 2-2. The equipment used was a CGL in which an upstream soaking zone and a downstream soaking zone were connected by sealing rollers. Various production conditions not listed in Tables 2-1 and 2-2 were as follows.

- Coating bath composition: Zn bath containing 0.13 wt% Al
- Coating bath temperature: 460 °C
- Coating weight range: 40 gm$^{-2}$ to 60 gm$^{-2}$
- Alloying degree range: 8.0 mass% to 14.0 mass%
- Hydrogen concentration during reheating in the cooling-reheating process: 0.1 vol%

The tensile strength (TS) was measured by the method described above.

Coatability

The coating appearance of each galvannealed steel sheet was evaluated by the method described below.

<Appearance>

The coating surface of each galvannealed steel sheet was visually observed and evaluated and ranked according to the following criteria. Ranks 1 and 2 were within the preferred range of the present disclosure.

| Appearance | Rank |
|---|---|
| No bare spots or uneven appearance: | 1 |
| No bare spots, but uneven appearance: | 2 |
| Bare spot: | 3 |

<Diffusible hydrogen content in steel sheet>

The diffusible hydrogen content in the steel was determined according to the method described above and evaluated according to the following criteria. Ranks 1 and 2 were within the preferred range of the present disclosure.

| Diffusible hydrogen content in steel (weight ppm) | Rank |
|---|---|
| 0.20 or less: | 1 |
| More than 0.20 and 0.30 or less: | 2 |
| More than 0.30: | 3 |

<Hydrogen embrittlement resistance>

To evaluate hydrogen embrittlement resistance, the occurrence of cracks in resistance spot welded portions was evaluated. Test pieces of 30mm $\times$ 100 mm were cut out from each galvannealed steel sheet. A spacer having a sheet thickness of 2 mm was placed at both ends of the test pieces, and the center between the spacers was joined by spot welding to prepare a welded test piece. In the spot welding, an inverter direct current (DC) resistance spot welder was used, and the electrodes were dome types having tip diameters of 6 mm made of chrome copper. The electrode force was 380 kgf, the current passage time was 16 cycles/50 Hz, and the holding time was 5 cycles/50 Hz. The welding current value was set to a condition for forming a nugget diameter corresponding to the tensile strength of each steel sheet. The nugget diameter was 3.8 mm when the tensile strength was less than 1250 MPa, and 4.8 mm when the tensile strength was 1250 MPa or more. The space between the spacers on each end was set to 40 mm, and the steel sheet and the spacers were previously fixed together by welding. After the welding, the assembly was left for 24 hours, and then the spacer portion was cut off. A cross-section of the weld nugget was observed and evaluated according to the following criteria. Ranks 1 and 2 were within the preferred range of the present disclosure.

| Crack observation results | Rank |
|---|---|
| No cracks: | 1 (particularly good hydrogen embrittlement resistance) |
| Only microcracks of 100 $\mu$m or less occurred: | 2 (good hydrogen embrittlement resistance) |
| Crack larger than 100 $\mu$m: | 3 (poor hydrogen embrittlement resistance) |

Table 1

| Steel sample ID | C | Si | Mn | P | S | Al | N | [Si]/[Mn] | Other | Remarks |
|---|---|---|---|---|---|---|---|---|---|---|
| A | 0.150 | 1.50 | 3.00 | 0.010 | 0.0020 | 0.03 | 0.0030 | 0.50 | - | Conforming steel |
| B | 0.180 | 1.50 | 3.00 | 0.010 | 0.0020 | 0.03 | 0.0030 | 0.50 | - | Conforming steel |
| C | 0.100 | 1.50 | 2.30 | 0.010 | 0.0020 | 0.03 | 0.0030 | 0.65 | - | Conforming steel |
| D | 0.120 | 1.50 | 3.00 | 0.010 | 0.0020 | 0.03 | 0.0030 | 0.50 | - | Conforming steel |
| E | 0.180 | 1.50 | 2.20 | 0.010 | 0.0020 | 0.03 | 0.0030 | 0.68 | - | Conforming steel |

(continued)

| Steel sample ID | C | Si | Mn | P | S | Al | N | [Si]/[Mn] | Other | Remarks |
|---|---|---|---|---|---|---|---|---|---|---|
| F | 0.200 | 1.00 | 3.00 | 0.010 | 0.0020 | 0.03 | 0.0030 | 0.33 | - | Conforming steel |
| G | 0.230 | 1.20 | 3.00 | 0.010 | 0.0020 | 0.03 | 0.0030 | 0.40 | - | Conforming steel |
| H | 0.100 | 0.50 | 3.00 | 0.010 | 0.0020 | 0.03 | 0.0030 | 0.17 | - | Conforming steel |
| I | 0.150 | 0.40 | 2.50 | 0.010 | 0.0020 | 0.03 | 0.0030 | 0.16 | - | Conforming steel |
| J | 0.100 | 0.60 | 3.00 | 0.010 | 0.0020 | 0.03 | 0.0030 | 0.20 | - | Conforming steel |
| K | 0.150 | 0.50 | 2.50 | 0.010 | 0.0020 | 0.03 | 0.0030 | 0.20 | - | Conforming steel |
| L | 0.200 | 0.70 | 3.00 | 0.010 | 0.0020 | 0.03 | 0.0030 | 0.23 | - | Conforming steel |
| M | 0.150 | <u>2.50</u> | 3.00 | 0.010 | 0.0020 | 0.03 | 0.0030 | 0.83 | - | Comparative steel |
| N | 0.150 | 1.80 | <u>5.10</u> | 0.010 | 0.0020 | 0.03 | 0.0030 | 0.35 | - | Comparative steel |

Underlining indicates a value outside an appropriate range of the present disclosure

Table 2-1

| No. | Steel sample ID | Oxidizing process | | Reducing process | | | | Soaking process | | | | Cooling process | | | Remarks |
|---|---|---|---|---|---|---|---|---|---|---|---|---|---|---|---|
| | | Oxygen conc. | Steel sheet temp. (maximum arrival temp.) | Steel sheet temp. | Holding time | Dew point | Hydrogen conc. | Steel sheet temp. | Holding time | Dew point | Hydrogen conc. | Cooling rate | Dew point | Hydrogen conc. | |
| | | vol. ppm | °C | °C | s | °C | vol% | °C | s | °C | vol% | °C/s | °C | vol% | |
| 1 | A | 2000 | 700 | 800 | 25 | -35 | 15 | 800 | 80 | -15 | 2.0 | 10 | -35 | 5 | Example |
| 2 | A | 2000 | 700 | 800 | 25 | -35 | 15 | 800 | 80 | -15 | 2.0 | 10 | -35 | 5 | Example |
| 3 | A | 2000 | 700 | 800 | 25 | -35 | 15 | 800 | 80 | -15 | 2.0 | 10 | -35 | 5 | Example |
| 4 | A | 2000 | 700 | 800 | 25 | -35 | 15 | 800 | 80 | -15 | 0.5 | 10 | -35 | 5 | Example |
| 5 | A | 2000 | 700 | 800 | 25 | -35 | 15 | 800 | 80 | -15 | 2.0 | 10 | -35 | 5 | Example |
| 6 | B | 2000 | 700 | 850 | 25 | -35 | 15 | 850 | 80 | -15 | 2.0 | 10 | -35 | 5 | Example |
| 7 | B | 2000 | 700 | 850 | 25 | -35 | 15 | 850 | 80 | -15 | 8.0 | 10 | -35 | 5 | Example |
| 8 | B | 2000 | 700 | 850 | 25 | -35 | 15 | 850 | 80 | -15 | 2.0 | 10 | -35 | 5 | Example |
| 9 | B | 2000 | 700 | 850 | 25 | -35 | 15 | 850 | 80 | -15 | 5.0 | 10 | -35 | 5 | Example |
| 10 | B | 2000 | 700 | 850 | 25 | -35 | 15 | 850 | 80 | -15 | 8.0 | 10 | -35 | 5 | Example |
| 11 | C | 2000 | 700 | 800 | 25 | -35 | 15 | 880 | 80 | -15 | 2.0 | 10 | -35 | 5 | Example |
| 12 | C | 2000 | 700 | 800 | 25 | -35 | 15 | 880 | 80 | -25 | 2.0 | 10 | -35 | 5 | Example |
| 13 | C | 2000 | 700 | 800 | 25 | -35 | 15 | 880 | 80 | -15 | 2.0 | 10 | -35 | 5 | Example |
| 14 | C | 2000 | 700 | 800 | 25 | -35 | 15 | 880 | 80 | -15 | 2.0 | 10 | -35 | 5 | Example |
| 15 | C | 2000 | 700 | 800 | 25 | -35 | 15 | 880 | 80 | -15 | 2.0 | 10 | -35 | 5 | Example |
| 16 | D | 2000 | 700 | 850 | 25 | -35 | 15 | 850 | 80 | -15 | 2.0 | 10 | -35 | 5 | Example |
| 17 | D | 2000 | 700 | 850 | 25 | -35 | 15 | 850 | 80 | -15 | 2.0 | 10 | -35 | 0.5 | Example |
| 18 | D | 2000 | 700 | 850 | 25 | -35 | 15 | 850 | 80 | -15 | 2.0 | 10 | -5 | 5 | Example |
| 19 | E | 2000 | 700 | 850 | 25 | -35 | 15 | 850 | 80 | -15 | 2.0 | 10 | -35 | 5 | Example |
| 20 | E | 2000 | 700 | 850 | 25 | -35 | 15 | 850 | 80 | -15 | 2.0 | 10 | -35 | 30 | Example |
| 21 | E | 2000 | 700 | 850 | 25 | -35 | 15 | 850 | 80 | -15 | 2.0 | 10 | -35 | 20 | Example |

EP 4 678 780 A1

(continued)

| No. | Steel sample ID | Oxidizing process | | Reducing process | | | | Soaking process | | | | Cooling process | | | Remarks |
|---|---|---|---|---|---|---|---|---|---|---|---|---|---|---|---|
| | | Oxygen conc. | Steel sheet temp. (maximum arrival temp.) | Steel sheet temp. | Holding time | Dew point | Hydrogen conc. | Steel sheet temp. | Holding time | Dew point | Hydrogen conc. | Cooling rate | Dew point | Hydrogen conc. | |
| | | vol. ppm | °C | °C | s | °C | vol% | °C | s | °C | vol% | °C/s | °C | vol% | |
| 22 | F | 2000 | 700 | 880 | 25 | -35 | 15 | 880 | 80 | -35 | 2.0 | 10 | -35 | 5 | Example |
| 23 | F | 2000 | 700 | 880 | 25 | -35 | 15 | 880 | 80 | -15 | 2.0 | 10 | -35 | 5 | Example |
| 24 | F | 2000 | 700 | 880 | 25 | -35 | 30 | 880 | 80 | -35 | 8.0 | 10 | -35 | 5 | Example |
| 25 | F | 2000 | 700 | 880 | 25 | -35 | 20 | 880 | 80 | -35 | 8.0 | 10 | -35 | 5 | Example |
| 26 | F | 2000 | 700 | 880 | 25 | -35 | 15 | 880 | 80 | -35 | 8.0 | 10 | -35 | 5 | Example |
| 27 | G | 2000 | 700 | 880 | 25 | -35 | 15 | 880 | 80 | -15 | 2.0 | 10 | -35 | 5 | Example |
| 28 | G | 2000 | 700 | 880 | 25 | -35 | 15 | 880 | 80 | 20 | 2.0 | 10 | -35 | 5 | Example |
| 29 | H | 2000 | 700 | 800 | 25 | -35 | 15 | 800 | 80 | -15 | 2.0 | 10 | -35 | 5 | Example |
| 30 | I | 2000 | 700 | 820 | 25 | -35 | 15 | 820 | 80 | -15 | 2.0 | 10 | -35 | 5 | Example |
| 31 | J | 2000 | 650 | 800 | 25 | -35 | 15 | 800 | 80 | -35 | 2.0 | 10 | -35 | 5 | Example |
| 32 | J | 2000 | 650 | 800 | 25 | -35 | 15 | 800 | 80 | -25 | 2.0 | 10 | -35 | 5 | Example |
| 33 | J | 2000 | 650 | 800 | 25 | -35 | 15 | 800 | 80 | -35 | 2.0 | 10 | -35 | 5 | Example |
| 34 | J | 2000 | 650 | 800 | 25 | -35 | 15 | 800 | 80 | -35 | 2.0 | 10 | -35 | 5 | Example |
| 35 | J | 2000 | 650 | 800 | 25 | -35 | 15 | 800 | 80 | -35 | 2.0 | 10 | -35 | 5 | Example |
| 36 | J | 2000 | 650 | 800 | 25 | -35 | 15 | 800 | 80 | -35 | 0.5 | 10 | -35 | 5 | Example |
| 37 | J | 2000 | 650 | 800 | 25 | -35 | 15 | 800 | 80 | -15 | 0.5 | 10 | -35 | 5 | Example |
| 38 | J | 2000 | 650 | 800 | 25 | -35 | 15 | 800 | 80 | -35 | 2.0 | 10 | -35 | 5 | Example |
| 39 | J | 2000 | 650 | 800 | 25 | -35 | 15 | 800 | 80 | -35 | 2.0 | 10 | -35 | 0.5 | Example |
| 40 | K | 2000 | 650 | 820 | 25 | -35 | 15 | 820 | 80 | -35 | 2.0 | 10 | -35 | 5 | Example |
| 41 | K | 2000 | 650 | 820 | 25 | -35 | 15 | 820 | 80 | -35 | 8.0 | 10 | -35 | 5 | Example |
| 42 | L | 2000 | 650 | 880 | 25 | -35 | 15 | 880 | 80 | -35 | 2.0 | 10 | -35 | 5 | Example |

| No. | Steel sample ID | Oxidizing process | | Reducing process | | | | | Soaking process | | | | Cooling process | | | Remarks |
|---|---|---|---|---|---|---|---|---|---|---|---|---|---|---|---|---|
| | | Oxygen conc. | Steel sheet temp. (maximum arrival temp.) | Steel sheet temp. | Holding time | Dew point | Hydrogen cone. | | Steel sheet temp. | Holding time | Dew point | Hydrogen cone. | Cooling rate | Dew point | Hydrogen cone. | |
| | | vol. ppm | °C | °C | s | °C | vol% | | °C | s | °C | vol% | °C/s | °C | vol% | |
| 43 | L | 2000 | 650 | 880 | 25 | -35 | 15 | | 880 | 80 | -35 | 0.5 | 10 | -35 | 5 | Example |
| 44 | L | 2000 | 650 | 880 | 25 | -35 | 15 | | 880 | 80 | -35 | 0.5 | 10 | -35 | 5 | Example |
| 45 | L | 2000 | 650 | 880 | 25 | -35 | 15 | | 880 | 80 | -35 | 0.5 | 10 | -35 | 5 | Example |
| 46 | L | 2000 | 650 | 880 | 25 | -35 | 15 | | 880 | 80 | -35 | 0.5 | 10 | -35 | 5 | Example |

EP 4 678 780 A1

Table 2-1 (cont'd)

| No. | Alloying process | | Cooling-reheating process | | | | TS (MPa) | Appearance | Diffusible hydrogen content in steel | | Hydrogen embrittlement resistance (welded portion crack presence) | Remarks |
|---|---|---|---|---|---|---|---|---|---|---|---|---|
| | | | Ms temp. | Cooling stop temp. | Reheating temp. | Holding time | | | | | | |
| | °C | s | °C | °C | °C | s | | Rank | (wt. ppm) | Rank | | |
| 1 | 550 | 20 | 331 | 50 | 300 | 60 | 1221 | 1 | 0.04 | 1 | 1 | Example |
| 2 | 550 | 20 | 331 | 200 | 300 | 60 | 1196 | 1 | 0.10 | 1 | 1 | Example |
| 3 | 550 | 20 | 331 | 200 | 300 | 30 | 1211 | 1 | 0.15 | 1 | 1 | Example |
| 4 | 550 | 20 | 331 | 200 | 300 | 60 | 1220 | 1 | 0.02 | 1 | 1 | Example |
| 5 | 550 | 20 | 331 | 50 | 450 | 60 | 1188 | 1 | 0.04 | 1 | 1 | Example |
| 6 | 550 | 20 | 341 | 50 | 300 | 60 | 1180 | 1 | 0.05 | 1 | 1 | Example |
| 7 | 550 | 20 | 341 | 50 | 300 | 60 | 1184 | 1 | 0.10 | 1 | 1 | Example |
| 8 | 550 | 20 | 341 | 200 | 400 | 60 | 1234 | 1 | 0.10 | 1 | 1 | Example |
| 9 | 550 | 20 | 341 | 200 | 400 | 60 | 1224 | 1 | 0.15 | 1 | 1 | Example |
| 10 | 550 | 20 | 341 | 200 | 400 | 60 | 1205 | 1 | 0.19 | 1 | 1 | Example |
| 11 | 550 | 20 | 315 | 50 | 300 | 60 | 1039 | 1 | 0.05 | 1 | 1 | Example |
| 12 | 550 | 20 | 315 | 200 | 400 | 60 | 1028 | | 0.25 | 2 | 2 | Example |
| 13 | 550 | 20 | 315 | 270 | 300 | 60 | 1150 | 1 | 0.15 | 1 | 1 | Example |
| 14 | 550 | 20 | 315 | 250 | 300 | 60 | 1101 | 1 | 0.12 | 1 | 1 | Example |
| 15 | 550 | 20 | 315 | 200 | 300 | 60 | 1070 | 1 | 0.10 | 1 | 1 | Example |
| 16 | 550 | 20 | 364 | 200 | 400 | 60 | 1038 | 1 | 0.10 | 1 | 1 | Example |
| 17 | 550 | 20 | 364 | 200 | 400 | 60 | 1025 | 1 | 0.05 | 1 | 1 | Example |
| 18 | 550 | 20 | 364 | 200 | 400 | 60 | 1018 | 1 | 0.10 | 1 | 1 | Example |
| 19 | 550 | 20 | 271 | 200 | 400 | 60 | 1005 | 1 | 0.10 | 1 | 1 | Example |
| 20 | 550 | 20 | 271 | 200 | 400 | 60 | 995 | 1 | 0.15 | 1 | 1 | Example |
| 21 | 550 | 20 | 271 | 200 | 400 | 60 | 998 | 1 | 0.12 | 1 | 1 | Example |
| 22 | 550 | 20 | 357 | 50 | 300 | 60 | 1499 | 2 | 0.21 | 2 | 2 | Example |
| 23 | 550 | 20 | 357 | 50 | 300 | 60 | 1471 | 1 | 0.15 | 2 | 1 | Example |

(continued)

| No. | Alloying process | | Ms temp. | Cooling-reheating process | | | TS (MPa) | Appearance | Diffusible hydrogen content in steel | | Hydrogen embrittlement resistance (welded portion crack presence) | Remarks |
|---|---|---|---|---|---|---|---|---|---|---|---|---|
| | °C | s | °C | Cooling stop temp. °C | Reheating temp. °C | Holding time s | | Rank | (wt. ppm) | Rank | | |
| 24 | 550 | 20 | 357 | 50 | 300 | 60 | 1503 | 2 2 | 0.26 | 2 | 2 | Example |
| 25 | 550 | 20 | 357 | 50 | 300 | 60 | 1501 | 2 | 0.24 | 2 | 2 | Example |
| 26 | 550 | 20 | 357 | 50 | 300 | 60 | 1488 | 2 | 0.22 | 2 | 2 | Example |
| 27 | 550 | 20 | 342 | 200 | 400 | 60 | 1533 | 1 | 0.19 | 1 | 1 | Example |
| 28 | 550 | 20 | 342 | 200 | 400 | 60 | 1519 | 1 | 0.05 | 1 | 1 | Example |
| 29 | 550 | 20 | 338 | 50 | 300 | 60 | 1081 | 2 | 0.03 | 1 | 1 | Example |
| 30 | 550 | 20 | 389 | 50 | 300 | 60 | 1190 | 2 | 0.05 | 1 | 1 | Example |
| 31 | 500 | 20 | 338 | 50 | 300 | 60 | 987 | 1 | 0.11 | 1 | 1 | Example |
| 32 | 500 | 20 | 338 | 50 | 300 | 60 | 981 | 1 | 0.09 | 1 | 1 | Example |
| 33 | 500 | 20 | 338 | 200 | 300 | 60 | 1094 | 1 | 0.15 | 1 | 1 | Example |
| 34 | 500 | 20 | 338 | 200 | 300 | 30 | 1089 | 1 | 0.19 | 1 | 1 | Example |
| 35 | 500 | 20 | 338 | 200 | 300 | 300 | 1040 | 1 | 0.08 | 1 | 1 | Example |
| 36 | 500 | 20 | 338 | 200 | 300 | 60 | 1036 | 1 | 0.08 | 1 | 1 | Example |
| 37 | 500 | 20 | 338 | 50 | 300 | 60 | 1051 | 2 | 0.07 | 1 | 1 | Example |
| 38 | 500 | 20 | 338 | 50 | 450 | 60 | 1079 | 1 | 0.12 | 1 | 1 | Example |
| 39 | 500 | 20 | 338 | 200 | 300 | 30 | 1010 | 1 | 0.12 | 1 | 1 | Example |
| 40 | 500 | 20 | 389 | 50 | 300 | 60 | 1195 | 1 | 0.11 | 1 | 1 | Example |
| 41 | 500 | 20 | 389 | 50 | 300 | 60 | 1247 | 1 | 0.15 | 1 | 1 | Example |
| 42 | 500 | 20 | 358 | 50 | 300 | 60 | 1513 | 2 | 0.25 | 2 | 2 | Example |
| 43 | 500 | 20 | 358 | 200 | 300 | 60 | 1584 | 2 | 0.23 | 2 | 2 | Example |
| 44 | 500 | 20 | 358 | 300 | 300 | 60 | 1592 | 2 | 0.25 | 2 | 2 | Example |
| 45 | 500 | 20 | 358 | 50 | 100 | 300 | 1473 | 2 | 0.25 | 2 | 2 | Example |
| 46 | 500 | 20 | 358 | 50 | 200 | 300 | 1350 | 2 | 0.15 | 1 | 1 | Example |

Table 2-2

| No. | Steel sample ID | Oxidizing process | | Reducing | process | | | Soaking process | | | | Cooling process | | | Remarks |
|---|---|---|---|---|---|---|---|---|---|---|---|---|---|---|---|
| | | Oxygen conc. | Steel sheet temp. (maximum arrival temp.) | Steel sheet temp. | Holding time | Dewpoint | Hydrogen conc. | Steel sheet temp. | Holding time | Dew point | Hydrogen conc. | Cooling rate | Dew point | Hydrogen conc. | |
| | | vol. ppm | °C | °C | s | °C | vol% | °C | s | °C | vol% | °C/s | °C | vol% | |
| 47 | A | 2000 | 700 | 800 | 25 | -35 | 3 | 800 | 80 | -15 | 2.0 | 10 | -35 | 5 | Comparative Example |
| 48 | A | 2000 | 700 | 800 | 25 | -35 | 15 | 800 | 80 | -15 | 0.0 | 10 | -35 | 5 | Comparative Example |
| 49 | A | 2000 | 700 | 800 | 25 | -35 | 15 | 800 | 80 | -15 | 2.0 | 10 | -35 | 5 | Comparative Example |
| 50 | A | 2000 | 700 | 800 | 25 | -35 | 15 | 800 | 80 | -15 | 2.0 | 10 | -35 | 5 | Comparative Example |
| 51 | B | 2000 | 550 | 850 | 25 | -35 | 15 | 850 | 80 | -15 | 2.0 | 10 | -35 | 5 | Comparative Example |
| 52 | c | 2000 | 700 | 800 | 25 | -35 | 15 | 880 | 80 | -15 | 2.0 | 10 | -35 | 5 | Comparative Example |
| 53 | D | 2000 | 700 | 850 | 25 | -35 | 15 | 850 | 80 | -15 | 2.0 | 10 | -35 | 5 | Comparative Example |
| 54 | F | 2000 | 700 | 880 | 25 | -35 | 15 | 880 | 80 | -15 | 15 | 10 | -35 | 5 | Comparative Example |
| 55 | J | 2000 | 650 | 800 | 25 | -35 | 3 | 800 | 80 | -35 | 0.5 | 10 | -35 | 5 | Comparative Example |
| 56 | J | 2000 | 650 | 800 | 25 | -35 | 15 | 800 | 80 | -35 | 0.0 | 10 | -35 | 5 | Comparative Example |
| 57 | J | 2000 | 650 | 820 | 25 | -35 | 15 | 820 | 80 | -35 | 0.5 | 10 | -35 | 5 | Comparative Example |
| 58 | J | 2000 | 650 | 800 | 25 | -35 | 15 | 800 | 80 | -35 | 0.5 | 10 | -35 | 5 | Comparative Example |

EP 4 678 780 A1

(continued)

| No. | Steel sample ID | Oxidizing process | | Reducing process | | | | Soaking process | | | | Cooling process | | | Remarks |
|---|---|---|---|---|---|---|---|---|---|---|---|---|---|---|---|
| | | Oxygen conc. | Steel sheet temp. (maximum arrival temp.) | Steel sheet temp. | Holding time | Dewpoint | Hydrogen conc. | Steel sheet temp. | Holding time | Dew point | Hydrogen conc. | Cooling rate | Dew point | Hydrogen conc. | |
| | | vol. ppm | °C | °C | s | °C | vol% | °C | s | °C | vol% | °C/s | °C | vol% | |
| 59 | K | 2000 | 650 | 820 | 25 | -35 | 15 | 820 | 80 | -35 | 0.5 | 10 | -35 | 5 | Comparative Example |
| 60 | K | 2000 | <u>550</u> | 820 | 25 | -35 | 15 | 820 | 80 | -35 | 0.5 | 10 | -35 | 5 | Comparative Example |
| 61 | K | 2000 | 650 | 820 | 25 | -35 | 15 | 820 | 80 | -35 | 0.5 | 10 | -35 | 5 | Comparative Example |
| 62 | <u>M</u> | 2000 | 700 | 800 | 25 | -35 | 15 | 800 | 80 | -15 | 2.0 | 10 | -35 | 5 | Comparative Example |
| 63 | N | 2000 | 700 | 800 | 25 | -35 | 15 | 800 | 80 | -15 | 2.0 | 10 | -35 | 5 | Comparative Example |
| 64 | N | 2000 | 650 | 800 | 25 | -35 | 15 | 800 | 80 | -35 | 0.5 | 10 | -35 | 5 | Comparative Example |
| Underlining indicates a value outside an appropriate range of the present disclosure | | | | | | | | | | | | | | | |

Table 2-2 (cont'd)

| No. | Alloying process | | Cooling-reheating process | | | | TS (MPa) | Appearance | Diffusible hydrogen content in steel | | Hydrogen embrittlement resistance (welded portion crack presence) | Remarks |
|---|---|---|---|---|---|---|---|---|---|---|---|---|
| | | | Ms temp. | Cooling stop temp. | Reheating temp. | Holding time | | | | | | |
| | °C | s | °C | °C | °C | s | | Rank | (wt. ppm) | Rank | | |
| 47 | 550 | 20 | 331 | 50 | 300 | 60 | 1224 | 3 | 0.04 | 1 | 1 | Comparative Example |
| 48 | 550 | 20 | 331 | 50 | 300 | 60 | 1238 | 3 | 0.01 | 1 | 1 | Comparative Example |
| 49 | 550 | 20 | 331 | 50 | 500 | 60 | 1188 | 3 | 0.02 | 1 | 1 | Comparative Example |
| 50 | - | - | 331 | 50 | 300 | 60 | 1236 | 1 | 0.34 | 3 | 3 | Comparative Example |
| 51 | 550 | 20 | 341 | 50 | 300 | 60 | 1217 | 3 | 0.05 | 1 | 1 | Comparative Example |
| 52 | 550 | 20 | 315 | 265 | 300 | 10 | 1180 | 1 | 0.31 | 3 | 3 | Comparative Example |
| 53 | 550 | 20 | 364 | 400 | 400 | 60 | 1221 | 1 | 0.40 | 3 | 3 | Comparative Example |
| 54 | 550 | 20 | 357 | 50 | 300 | 60 | 1547 | 1 | 0.35 | 3 | 3 | Comparative Example |
| 55 | 500 | 20 | 338 | 50 | 300 | 60 | 1093 | 3 | 0.04 | 1 | 1 | Comparative Example |
| 56 | 500 | 20 | 338 | 50 | 300 | 60 | 1051 | 3 | 0.04 | 1 | 1 | Comparative Example |
| 57 | 500 | 20 | 389 | 50 | 300 | 10 | 1243 | 1 | 0.32 | 3 | 3 | Comparative Example |
| 58 | 500 | 20 | 338 | 50 | 500 | 60 | 911 | 3 | 0.04 | 1 | 1 | Comparative Example |
| 59 | - | - | 338 | 50 | 300 | 60 | 1195 | 1 | 0.40 | 3 | 3 | Comparative Example |
| 60 | 500 | 20 | 338 | 50 | 300 | 60 | 1220 | 3 | 0.10 | 1 | 1 | Comparative Example |
| 61 | 500 | 20 | 389 | 400 | 400 | 60 | 1254 | 1 | 0.38 | 3 | 3 | Comparative Example |
| 62 | 550 | 20 | 270 | 50 | 300 | 60 | 995 | 3 | 0.10 | 1 | 1 | Comparative Example |
| 63 | 550 | 20 | 265 | 50 | 300 | 60 | 1339 | 3 | 0.19 | 1 | 1 | Comparative Example |
| 64 | 500 | 20 | 327 | 50 | 300 | 60 | 1328 | 3 | 0.18 | 1 | 1 | Comparative Example |

Underlining indicates a value outside an appropriate range of the present disclosure

Of the galvannealed steel sheets listed in Tables 2-1 and 2-2, the Examples according to the present disclosure are superior in coatability to the Comparative Examples, and the diffusible hydrogen content in the steel is sufficiently decreased, resulting in excellent hydrogen embrittlement resistance.

REFERENCE SIGNS LIST

1    upstream soaking zone
2    downstream soaking zone
3    atmosphere sealing zone
4    roller
5    steel strip
6    dew point measurement position

**Claims**

1. A method of producing a galvannealed steel sheet, the method comprising:

   an oxidizing process of heating a steel sheet having a chemical composition containing, in mass%, Si: 0.10 % or more and 2.00 % or less, and Mn: 1.0 % or more and 5.0 % or less, to 600 °C or more in an oxidizing atmosphere containing $O_2$: 1000 volume ppm or more and 30,000 volume ppm or less;
   a reducing process of holding the steel sheet after the oxidizing process at 700 °C or more in a reducing atmosphere having a hydrogen concentration of more than 8 vol% and 30 vol% or less for 20 s or longer;
   a soaking process of holding the steel sheet after the reducing process at 750 °C or more in a soaking atmosphere having a hydrogen concentration of 0.2 vol% or more and 8 vol% or less for 20 s to 300 s;
   a cooling process of cooling the steel sheet after the soaking process;
   a coating process of immersing the steel sheet after the cooling in a hot-dip galvanizing bath to obtain a hot-dip galvanized steel sheet;
   an alloying process of carrying out an alloying treatment on the hot-dip galvanized steel sheet to obtain a galvannealed steel sheet; and
   a cooling-reheating process of cooling the galvannealed steel sheet to a cooling stop temperature that is the Ms temperature or less, then holding the galvannealed steel sheet at a temperature that is the cooling stop temperature or more, 100 °C or more, and 450 °C or less for 30 s or longer in a reheating atmosphere having a hydrogen concentration of 0.2 vol% or less.

2. The method of producing a galvannealed steel sheet according to claim 1, wherein [Si]/[Mn] in the chemical composition is 0.23 or more, and

   a dew point in the soaking process is -20 °C or more and +20 °C or less,
   where [Si] and [Mn] indicate the content, in mass%, of Si and Mn in the chemical composition.

3. The method of producing a galvannealed steel sheet according to claim 1, wherein [Si]/[Mn] in the chemical composition is less than 0.23,

   a dew point in the reducing process is less than -20 °C, and
   a dew point in the soaking process is less than -20 °C,
   where [Si] and [Mn] indicate the content, in mass%, of Si and Mn in the chemical composition.

4. The method of producing a galvannealed steel sheet according to any one of claims 1 to 3, wherein the hydrogen concentration in the soaking process is 0.2 vol% or more and 5 vol% or less.

5. The method of producing a galvannealed steel sheet according to any one of claims 1 to 4, wherein, in the cooling process, the steel sheet after the soaking process is cooled in an atmosphere having a hydrogen concentration of 0.5 vol% or more and 30 vol% or less and a dew point of 0 °C or less from 600 °C or more and 900 °C or less at an average cooling rate of 10 °C/s or more to 300 °C or more and 500 °C or less.

6. The method of producing a galvannealed steel sheet according to any one of claims 1 to 5, wherein the chemical composition further contains, in mass%,

C: 0.05 % or more and 0.40 % or less,
P: 0.001 % or more and 0.100 % or less,
S: 0.0200 % or less,
Al: 0.003 % or more and 2.000 % or less, and
N: 0.0100 % or less, with the balance being Fe and inevitable impurity.

7. The method of producing a galvannealed steel sheet according to any one of claims 1 to 6, wherein the chemical composition further contains, in mass%, one or more selected from:

B: 0.0100 % or less,
Ti: 0.200 % or less,
Nb: 0.200 % or less,
Sb: 0.200 % or less,
Sn: 0.200 % or less,
V: 0.100 % or less,
Cu: 1.00 % or less,
Cr: 1.00 % or less,
Ni: 1.00 % or less,
Mo: 0.50 % or less,
Ta: 0.100 % or less,
W: 0.500 % or less,
Zr: 0.020 % or less,
Ca: 0.0200 % or less
Mg: 0.0200 % or less,
Zn: 0.020 % or less,
Co: 0.020 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less.

8. The method of producing a galvannealed steel sheet according to any one of claims 1 to 7, wherein, in the cooling-reheating process, the cooling stop temperature is (Ms temperature - 50 °C) or less.

9. The method of producing a galvannealed steel sheet according to claim 8, wherein the cooling stop temperature is (Ms temperature - 100 °C) or less.

# FIG. 1

# INTERNATIONAL SEARCH REPORT

| International application No. |
|---|
| **PCT/JP2023/016963** |

| A. | CLASSIFICATION OF SUBJECT MATTER |
|---|---|

*C23C 2/06*(2006.01)i; *C23C 2/28*(2006.01)i; *C23C 8/10*(2006.01)i; *C23C 8/80*(2006.01)i
FI:   C23C2/06; C23C2/28; C23C8/10; C23C8/80

According to International Patent Classification (IPC) or to both national classification and IPC

| B. | FIELDS SEARCHED |
|---|---|

Minimum documentation searched (classification system followed by classification symbols)

C23C2/06; C23C2/28; C23C8/10; C23C8/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2019/106895 A1 (JFE STEEL CORP.) 06 June 2019 (2019-06-06)<br>entire text | 1-9 |
| A | JP 2017-166057 A (JFE STEEL CORP.) 21 September 2017 (2017-09-21)<br>entire text | 1-9 |
| A | JP 2007-031806 A (NIPPON STEEL CORP.) 08 February 2007 (2007-02-08)<br>entire text | 1-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/016963**

| Patent document cited in search report | | | Publication date (day/month/year) | Patent family member(s) | | | Publication date (day/month/year) |
|---|---|---|---|---|---|---|---|
| WO | 2019/106895 | A1 | 06 June 2019 | US | 2020/0377978 | A1 | |
| | | | | entire text | | | |
| | | | | EP | 3719157 | A1 | |
| | | | | KR | 10-2020-0083519 | A | |
| | | | | CN | 111433380 | A | |
| JP | 2017-166057 | A | 21 September 2017 | US | 2020/0199726 | A1 | |
| | | | | entire text | | | |
| | | | | EP | 3428303 | A1 | |
| | | | | KR | 10-2018-0111931 | A | |
| | | | | CN | 109072394 | A | |
| JP | 2007-031806 | A | 08 February 2007 | (Family: none) | | | |

Form PCT/ISA/210 (patent family annex) (January 2015)

**EP 4 678 780 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016053211 A
- JP 54130443 A
- JP 3266008 B
- JP 5811841 B
- JP 2020045568 A